Europäisches Patentamt

European Patent Office

Office européen des brevets

(19)

(11) Publication number: **0 113 065**
**A1**

(12) **EUROPEAN PATENT APPLICATION**

(21) Application number: **83112124.9**

(22) Date of filing: **02.12.83**

(51) Int. Cl.³: **G 02 F 1/133**

(30) Priority: **06.12.82 US 446842**

(43) Date of publication of application:
**11.07.84 Bulletin 84/28**

(84) Designated Contracting States:
**DE FR GB IT NL**

(71) Applicant: **TEKTRONIX, INC.**
**D/S Y3-121 4900 S.W. Griffith Drive P.O. Box 500**
**Beaverton Oregon 97077(US)**

(72) Inventor: **Vatne, Rolf S.**
**17345 N.W. Madras Court**
**Beaverton Oregon 97006(US)**

(74) Representative: **Strasse, Joachim, Dipl.-Ing. European**
**Patent Attorney et al,**
**Strasse & Stoffregen Zweibrückenstrasse 15**
**D-8000 München 2(DE)**

(54) **Liquid crystal cell employing compression loading to achieve uniform interplate spacing, and method of construction thereof.**

(57) A liquid crystal display cell is provided in which a first wall-forming plate (41) of the cell is provided with a plurality of spacers (42) on its surface. A uniform loading force is applied to the cell which seats a second wall-forming plate (44) against the spacers on the first plate, thereby conforming and uniformly spacing the plates. The force is provided by a pressure plate (47) placed adjacent to the second plate so that the second plate is sandwiched between the first plate and the pressure plate. A layer of elastomer (48) is placed between the pressure plate and the second plate. The pressure plate is then clamped to the first plate and the clamping pressure is transferred uniformly to the second plate.

FIG. 3

Croydon Printing Company Ltd.

# LIQUID CRYSTAL CELL EMPLOYING COMPRESSION
# LOADING TO ACHIEVE UNIFORM INTERPLATE SPACING,
# AND METHOD OF CONSTRUCTION THEREOF

## BACKGROUND OF THE INVENTION

The present invention relates to liquid crystal display (LCD) cells and their construction, particularly to uniformly-spaced LCD cells.

An LCD cell is formed from a pair of plates, at least one of which is transparent and typically made of glass, which are sealed at their peripheries to contain a thin film of liquid crystal material which is sandwiched between them. Such cells support electrodes on their facing surfaces for applying electric fields in selected patterns across the film of liquid crystal material, at least one electrode being disposed on a transparent plate and itself being transparent. The electric field changes the optical transmission characteristics of the liquid crystal material, thereby permitting the modulation of light which travels through it.

The speed with which the liquid crystal material reacts to changes in the applied electric field, and thus the speed with which it modulates the light passing through it, is inversely related to the square of the thickness of the liquid crystal layer. In addition, certain optical characteristics of the cell (such as the amount of phase shift or retardation of transmitted light) depend critically on the thickness of the cell. Depending upon the use for which the LCD cell is intended, the thickness of the layer can vary from 1 micrometer to 100 micrometers.

To ensure that the LCD cell exhibits uniform optical and modulation characteristics across its entire active surface, the spacing between the plates forming the cell must be constant. This can pose a significant manufacturing problem in the case of very thin devices: for cells on the order of a few microns thick which are intended for high speed operation, variations in cell thickness of less than a micron can result in a significant change of modulation speed in the area where the variation occurs.

In the art, spacing uniformity is maintained between a pair of insulator plates generally by one or a combination of two methods: (1) the dimensions of a peripheral seal joining the plates are precisely controlled so that the seal also acts as a spacer; and (2) a spacer structure is disposed between the plates interior to a peripheral seal. Examples of the first method are found in Gurtler U.S. Patent No. 3,909,930, and Nagahara, et al., U.S. Patent No. 3,995,941. In the first patent, a spacing peripheral seal is formed when a photopolymeric material deposited on the periphery of one plate is bonded to the other plate by pressing the plates together and heating them. In the Nagahara reference, a low-melting point glass is used to form a peripheral sealant-spacer.

Examples of the second method are found in Leupp et al., U.S. Patent No. 3,978,580; Hofmann, U.S. Patent No. 4,283,119; J. Addy, et al., "Spaced Liquid Crystal Display" IBM Technical Disclosure Bulletin, Vol. 23, No. 5, October 1980; and in Arneson, et al., U.S. Patent Application Serial No. 81,757 filed October 4, 1979. In the Leupp, et al. patent, the internal spacer structure comprises a two-dimensional grid of photographically shaped dielectric material. The Hofmann spacers comprise thin wire filaments which are disposed between the insulator plates. The interior spacers of the Addy, et al. article also comprise photographically formed materials. In the Arneson patent application, the spacers comprise an array of projections of uniform height which are deposited upon the surface of one insulator plate by a photopatterning process.

An LCD cell combining both the peripheral seal and internal structure spacing methods is taught in Burns U.S. Patent No. 3,771,855. Mueller, et al., U.S. Patent No. 4,158,485, teaches the use of spacer elements incorporated into a peripheral seal which is used to join a pair of plates to form an LCD cell.

To achieve uniform spacing using the above-discussed methods of construction, plates having perfectly flat surfaces must be used, otherwise the spacers which are incorporated into the cell may not contact both cell surfaces and may only define a minimum but not a maximum spacing distance. While perfectly flat plates are desirable from the standpoint of achieving spacing uniformity, they are difficult and expensive to produce and their use in LCD cell construction must invariably and significantly increase cell production costs. This problem is particularly acute in the construction of large area, very thin film LCD cells because the difficulty in producing a perfectly flat plate is directly related to the area of the plate, and because even small deviations from flatness on the surface of the plate may be substantial when compared to the desired thickness of the confined liquid crystal layer. In the cases where non-flat plates will or must be used to construct cells, the methods and structures taught in the above-cited references will not provide uniform spacing.

A method and structure for removing or flattening plate bends and seating the plate against an integrated spacer structure in an LCD cell is taught in Maltese, et al., "Improved Construction of Liquid Crystal Cells," _Alta Frequenzia_, No. 9, Vol, XLVII, 1978. In the Maltese, et al. method, a plate is formed with a slight bend oriented outwardly from an associated plate. The bent plate is pressed against and cemented to the other plate so that the bend is flattened and stresses internal to the cell are set up which tend to force the plates together. The forces, however, are not distributed with uniform magnitude across the interface between the plates, with the result that the plates are not uniformly pressed together. Another limitation of this approach is that some of the internal stress of the plate acts in opposition to the cement seal, which may force it apart under conditions of thermal or electrical stress or when it has weakened from age. Finally, the process of placing the initial bend in the plate is a complex and slow one and can introduce unwanted stresses which interfere with the desired optical characteristics of the glass from which the plate is formed.

Accordingly, there has heretofore been a need for LCD cell construction methods which will provide uniformity of spacing between plates which are not perfectly flat.

## SUMMARY OF THE INVENTION

The present invention meets the aforementioned need by providing an LCD cell structure in which two plates are maintained by spacers, which are placed on one plate, in a uniformly-spaced relation by uniformly loading at least the other plate with a force which is uniformly distributed thereover in a direction which seats that plate against the spacers and conforms its contour to the contour of the one plate.

In accordance with a first preferred embodiment of the invention, a liquid crystal cell comprises a first plate having a plurality of spacers carried by one surface. An amount of liquid crystal material is placed upon the surface of the first plate which carries the spacers and a second plate is placed on the spacers to be positioned substantially parallel to the first plate, the second plate having a rigidity significantly less than the rigidity of the first plate, the relative rigidity of the plates being determined primarily by their relative thickness. The second plate carries a resilient material on its upper surface. A pressure plate which is more rigid than the second plate is placed over the second plate so that the second plate is sandwiched between the pressure plate and the first plate and the resilient material is sandwiched between the pressure plate and the second plate. The pressure plate is clamped to the first plate so that the pressure plate exerts a force which is uniformly distributed over the second plate through the resilient material, with the force being directed toward the first plate, thereby seating the second plate on the spacers and conforming to the contours of the two plates. The first plate and the second plate are sealed at their periphery so that the liquid crystal material is contained between them.

According to a second embodiment of the invention, a liquid crystal cell comprises a first plate having on one surface thereof a raised ledge of material forming a closed pattern and a plurality of spacers of substantially uniform height within the area delimited by the raised ledge, the spacers extending above the ledge. A metered amount of liquid crystal material is placed on the surface of the plate within the area delimited by the raised ledge and a second plate is placed on the spacers so that it is positioned with respect to and removed from the one surface of the second insulator plate. The surface tension of the liquid crystal material uniformly loads the first insulator plate with a force causing it to be drawn and seated against the spacers. The first and second insulator plates are sealed at their periphery.

0113065

In a third embodiment of the invention, an LCD cell is constructed by preparing a first plate by forming a plurality of spacers on one of its surfaces. Thereafter, a second plate is placed on the spacers and positioned substantially parallel to the first plate, and the periphery of the plates is hermetically sealed except for one or more openings. Liquid crystal material is introduced into the interior of the cell, between the plates, and all openings but one are sealed. Thereafter, an amount of the liquid crystal material is pumped out of the sealed interior through the one opening. Thereafter, the opening is sealed. The partial evacuation of liquid crystal material creates a differential in pressure between the closed interior of the LCD cell and the surrounding atmosphere which causes a force to seat the second plate on the spacers conforming it to the first plate and uniformly spacing the plates.

It is therefore a principal object of the present invention to provide a cell for containing liquid crystal material between two plates wherein uniform spacing between the two plates is accomplished by uniform loading of the plates, and methods for construction thereof.

It is another object of the invention to provide such a cell wherein uniform loading of one plate is accomplished by using a layer of resilient material to distribute force substantially uniformly over the surface of the plate.

It is yet another object of the invention to provide such a cell wherein uniform loading is accomplished by employing surface tension between the plates and the liquid crystal material to force the plates toward one another.

It is a further object of the invention to provide such a cell wherein uniform loading is accomplished by hermetically sealing the space between said plates and reducing the pressure therein.

-7-

The foregoing and other objectives, features, and advantages of the invention will be more readily understood upon consideration of the following detailed description of the invention, taken in conjunction with the accompanying drawings.

BRIEF DESCRIPTION OF THE DRAWINGS

FIG. 1 is a fragmentary cross-sectional view of a typical liquid crystal display cell.

FIG. 2 is a fragmentary cross-sectional view of a liquid crystal cell showing the effect of an imperfectly conforming plate.

FIG. 3 is a cross-sectional view of a first embodiment of a liquid crystal display cell.

FIG. 4 is a cross-sectional view of a second embodiment of a liquid crystal cell.

FIG. 5 is a cross-sectional view of a partially-constructed third embodiment of a liquid crystal cell, along with apparatus for construction thereof.

FIG. 6 is another cross-sectional view of said third embodiment of a liquid crystal cell, partially constructed, along with apparatus for construction thereof.

DESCRIPTION OF THE PREFERRED EMBODIMENTS

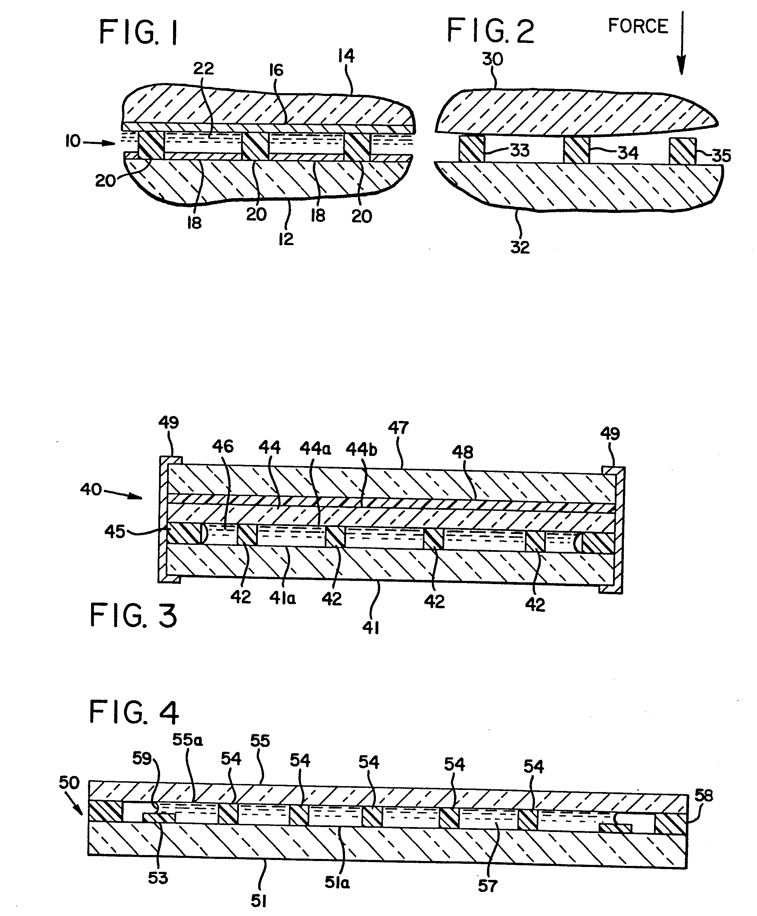

Referring now to the drawings, a typical liquid crystal display (hereinafter "LCD") cell having spacers of substantially uniform thickness incorporated in the construction thereof is illustrated in FIG. 1. The LCD cell 10 comprises first and second glass plates 12 and 14 which are held in a uniformly-spaced relationship by a plurality of spacers 20 formed in a pattern dictated by the intended use of the cell. Shown for purposes of illustration, but not limitation, are a plurality of transparent electrodes placed upon opposing surfaces of the plates 12 and 14, with plate 14 carrying a plurality of strip electrodes 16 in perpendicular alignment to a plurality of strip electrodes 18 carried by the plate 12. A quantity of liquid crystal material 22 is contained between the plates 12 and 14 by an appropriate seal, not illustrated, which extends around the periphery of plates 12 and 14.

The spacers 20 preferably comprise a dielectric material, such as photo-resist, which will not dissolve in or react with the liquid crystal material 22. The spacers may be formed on the surface of the plate 12 by any of a variety of deposition methods well known in the art of liquid crystal cell construction. An example of spacer construction for LCD cells is provided in the _Alta Frequenzia_ article cited above and also in a currently pending U.S. patent application, Serial No. 81,757, filed October 4, 1979, by Arneson, et al.

It can be the case that the plates forming the LCD cell are perfectly flat, as shown in FIG. 1. However, it is more often the case that their surfaces deviate from perfect planarity and produce effects in LCD cell construction which are illustrated in Fig. 2. Non-flatness of the plate 30 results in a deviation of the spacing between it and the plate 32, which spacing it is the purpose of the spacers 33, 34, and 35 to maintain. According to the principles underlying the methods of the present invention, the shape of the plate 30 may be conformed to the shape of the plate 32 by the application of a uniformly-distributed pressure differential between the cavity formed between the plates and the outer surfaces of the plates, with the pressure on the outer surface being greater than the pressure within the cavity. The pressure differential will seat the plate 30 against the spacers 33-35 thereby enforcing the uniformity of spacing between the plates and conforming the shape of plate 30 to the shape of plate 32.

It is evident from FIG. 2 that if a non-distributed force is applied to the plate 30 in the direction shown by the arrow, the force may concentrate and crush a spacer if the force is of sufficient magnitude. Thus, if a force sufficient to remove a bend in the plate were applied by clamping together the plates at their edges, it would concentrate on and could fracture the middle spacer 34. The possibility of damage to the spacer can be reduced according to the principles underlying the methods and structures of the present invention, if a distributed pressure differential is applied which uniformly loads the plate 30 to flatten it and seat it on the spacers.

The calculation of the force produced by the pressure differential which is to be applied on the insulator plate must take into account the maximum deformation which one spacer can undergo without exceeding its elastic limit. This can be determined from an approximate model depicting a section of plate between two spacers as a simple beam supported at both ends, and applying the well-known equation for the calculation of a uniformly-distributed force pressing the beam against the supports. The force is given by

$$F = \frac{6.4 \, (y_{max}) \, Ywt^3}{L^4} \tag{1}$$

where $y_{max}$ is the maximum expected deviation from planarity on the surface of the plate, Y is the Young's modulus of the material constituting the plate (typically glass), w is the width of the plate, t is the plate's thickness, and L is the length of the plate segment. For purposes of illustration, if it is assumed that w = 1", L = 1", t = 0.0625", $y_{max}$ = 2 micrometers and Y = $9.8x10^6$ lbs/in., the loading required for straightening the deflection is 1.21 lb/in. If it is also assumed that all of this force is distributed on one square spacer 0.01" on a side, a total stress of $1.2x10^4$ would be applied. The strain on the spacer is next calculated to ensure that it is not deformed beyond its elastic limit. According to the well-known formula, strain = (stress/Young's modulus). For a spacer constructed of, for example, a polyimide material which has a Young's modulus of $4.3x10^5$ lbs/in.$^2$, the strain would be 0.028, which is well within the material's elastic limit.

To impose the desired uniformity of spacing, it is important that the force uniformly load the plate, that is, that its magnitude not deviate significantly from its mean value as a function of location on the plate. Without uniform loading, it would be much more difficult to achieve uniform spacing and optimum operation of the cell.

Another factor to be considered in utilizing a force to impose uniform spacing is the electrostatic attractive force which will tend to force the plates together when the cell is operated. This force can be calculated according to known methods and must be accounted for in the calculation of strain on a spacer, it will effectively limit the magnitude of the uniform-spacing force. Also to be heeded is the bowing effect which the force will introduce into the already-flat sections of the loaded plate. However, the force calculation of equation (1) shows that spacer density can operate to diminish this effect. If the spacers are placed in selected locations, for example if they are spaced 0.25 inches apart, then the applied force which is adequate to take the curvature out of the 1-inch-square section postulated above will produce a deflection reduced by $(0.25)^3$ in the 0.25-inch section, or, less than 0.1 micrometer.

It is evident from the foregoing that a useful improvement in the construction of LCD cells may
be realized by the application of a distributed force
to one or both of the plates from which the cell is
constructed which uniformly loads the plate and which
presses one of them against spacers mounted on the
opposing plate to impose a uniform separation between
the plates.  As demonstrated above, the magnitude of
the force will be determined by the composition and
thickness of the plate or plates against which it is
applied, the maximum expected non-planarity in the
surface of the plate, and by the composition, size and
selective placement of the spacers.  As it is sometimes
the case that the size and separation of spacers are
determined by other design factors, such as the visibility of the spacers and their placement into a desired pattern, then the tradeoffs made to incorporate
the uniform-spacing force will affect the composition
and thickness, that is, the rigidity, of the plate
against which the force is applied.

        Referring now to FIG. 3 of the drawings,
which is not to scale, an LCD cell indicated generally
by 40, whose structure incorporates a uniform-loading
force, comprises a first plate 41 having a plurality
of individual spacers 42 of substantially uniform
thickness formed on its inner surface 41a.  The spacers maintain a minimum separation between the first
plate 41 and a second plate 44 less rigid than the
first, the second plate having a thickness determined
according to the considerations stated hereinabove,
and having an inner surface 44a and an outer surface
44b.  The cell additionally includes a seal 45
extending around the periphery of the plates to contain a liquid crystal material 46 sandwiched between
them.  A pressure plate 47, which is more rigid than
the second plate 44, is disposed adjacent the outer surface 44b of the second plate 44 so that the second plate is sandwiched between the pressure plate 47 and the first plate 41, a transparent resilient elastomer 48 being sandwiched between the pressure plate 47 and the outer surface 44b of the second plate 44. Also included in the structure are a plurality of clamps 49 which are pre-sprung in a direction which causes them to exert a compressive pressure between the pressure plate 47 and the first plate 41.

In the assembled cell, the clamps 49 develop a force which presses the pressure plate 47 and the first plate 41 toward each other. The force is transferred from pressure plate 47 through the resilient elastomer 48 which equalizes it and applies it uniformly across the outer surface 44b of the second plate 44 to seat it against the spacers 42. The force can be increased to a degree by prestressing the pressure plate to produce a convex surface which is placed against the elastomer 48 and flattened by the clamps 49.

The first and second plates and the pressure plate would typically be constructed of a transparent material, preferably, but not necessarily, glass. Alternatively, the second plate 44 can comprise other materials, structures, or combinations of both, which respond to the conforming force imposed by the pressure plate 47 in the manner and according to the considerations stated hereinabove. One or both of the plates 41 and 44 may have electrodes, not shown, on their opposing surfaces. While the plates would all be made of transparent material in order to produce a transmission-type LCD cell, only one plate would have to be transparent for a reflective-type display. In addition, while the plates would ordinarily be made of electrically insulating material, they would not necessarily have to be, depending upon how the electrical field pattern is to be produced.

The spacers can be deposited and selectively located by a conventional photolithographic process on the surface 41a of the first plate 41 which faces the second plate 44.  The seal 45 is formed from an epoxy compound or other suitable sealing material which is applied and cured by any well-known method.  The elastomer 48 comprises any conventional clear material having good resilient properties; it may consist of, for example, a clear silicone rubber compound such as that sold under the designation SILGARD, a trademark of E. I. Dupont deNemours & Company.

The LCD cell 40, illustrated in FIG. 3, is constructed by providing spacers 42 at multiple locations upon surface 41a of first plate 41.  A liquid crystal material 46 is placed on the surface 41a, and a second plate 44 is placed on the spacers 42, which substantially align the second plate with the first. The peripheral region between the first and second plates is closed by a seal 45 which contains the liquid crystal material between the plates.  An opening, not shown, is provided in the seal 45 to allow the liquid crystal material to flow after attachment of the pressure plate 47.  Thereafter, a layer of a transparent elastomer 48, preferably a clear silicone rubber compound is disposed on the outer surface 44b of the second plate 44.  A pressure plate 47 is placed on the resilient material 48 so that the material is sandwiched between the pressure plate and the second plate 44.  Thereafter the pressure plate 47 is clamped by clamps 49 to the first pressure plate 41.  The pressure plate 47 may be prestressed to form a convex surface which is placed against the elastomer 48 and flattened by the clamps 49.  As a final step, the opening in the seal 45 is closed, providing a continuous, unbroken barrier to retain the liquid crystal material in the cell.

A second embodiment of an LCD cell employing a uniform-spacing force is illustrated in FIG. 4, (not to scale). The cell, indicated generally by 50, comprises a first plate 51 having on its upper surface 51a a raised ledge 53 forming a closed pattern which delimits an area, preferably, but not necessarily, in the shape of a square or rectangle, a plurality of spacers 54 of uniform thickness deposited in an open pattern on the facing surface within the delimited area and projecting above the raised ledge which maintain a minimum separation between the first plate 51 and a second plate 55, a metered amount of liquid crystal material 57 which is sandwiched between and which contacts the first and second plates 51 and 55 in a space defined by the area delimited by the ledge 53, and a seal 58 which closes the peripheral gap between the first and second insulator plates to prevent the escape or contamination of the liquid crystal material 57.

The surface tension of the metered amount of liquid crystal material 57 provides the force which draws the interior surface 55a of the second plate 55 toward the first plate 51 and seats it on the spacers 54. In the case where the cell is vertical when filled, the magnitude of the force is given by the well-known surface tension force relationship:

$$F = t\frac{wh}{x} \tag{2}$$

where F is the calculated force, t is the surface tension of the liquid crystal material, w is the width of the plate area contacted by the liquid, h is the height of the liquid column, and x is the spacing between the plates. In the case where the cell is flat:

$$F = 2t\frac{wh}{x} \tag{3}$$

In equations (2) and (3) the quantity (wh)/x can be replaced by $V/x^2$ where $V = whx$ is the volume of liquid crystal material required to generate the desired force by surface tension. Thus, the metered amount of liquid crystal material is determined by V. This consideration alone is sufficient to calculate a required amount of material which could then be sandwiched between the plates without provision of the ledge 53. Assuming proper wetting of both plates to enable the liquid crystal to flow between them, the surface tension between the plates and the material will uniformly load the plates with the force calculated in equation (2) or (3).

In the embodiment illustrated in FIG. 4, the required volume of liquid crystal material is contained in and therefore determines the dimensions of the space between the plates which is defined by the area delimited by the raised ledge 53 and thickness of spacers 54. The relationship between the volume V and the dimensions are such to allow the formation of a meniscus 59 in the space between the ledge 53 and the inner surface 55a of the second plate 55. One effect of the raised ledge 53 is to confine the metered amount of liquid crystal material within the space defined by the delimited area. Another effect is to increase the magnitude of the force acting between the ledge 53 and the inner surface 55a by decreasing the spacing, x, in equations (2) and (3). However, it is evident that, in the most general case, the surface tension LCD cell illustrated in FIG. 4 will be operative without the ledge 53. The edge of the liquid crystal material would be irregular, but the surface tension would still create the desired force.

In the construction of the LCD cell illustrated in FIG. 4, the insulator plates and spacers are constructed according to the materials and methods specified for corresponding parts of the LCD cell illustrated in FIG. 3. In addition, at the time that the spacers 54 are deposited on the surface 52 of the first plate 51, the raised ledge 53 is formed as an added step in the same process. Once the ledge and spacers are formed, liquid crystal material 57 of an amount determined as explained hereinabove, is placed on the surface area of the first plate 51 delimited by the raised ledge 53. Then, the second plate is placed on the spacers 54 which orient it generally parallel to the first plate 51. After waiting a period of time sufficient to allow the liquid crystal material to stabilize and accumulate within the space between the plates defined by the delimited area, the plates are sealed at their periphery as described hereinabove for the LCD cell illustrated in FIG. 3.

In a variation of the method of constructing the LCD cell 50 illustrated in FIG. 3, the deposition and stabilization of the liquid crystal material can be performed in a vacuum drawn by conventional means. This will remove gasses trapped in the material which otherwise might collect at the interfaces between the insulator plates and the material and thereby create localized differentials in the force produced by the surface tension and impair the spacing uniformity.

An LCD cell as shown in FIG. 3 could also be constructed as a multiple layer device, each layer operating independently of the other. In this case, the second plate of a first layer could form the first plate of the next plate, and so on. Each layer would be constructed substantially as hereinbefore described.

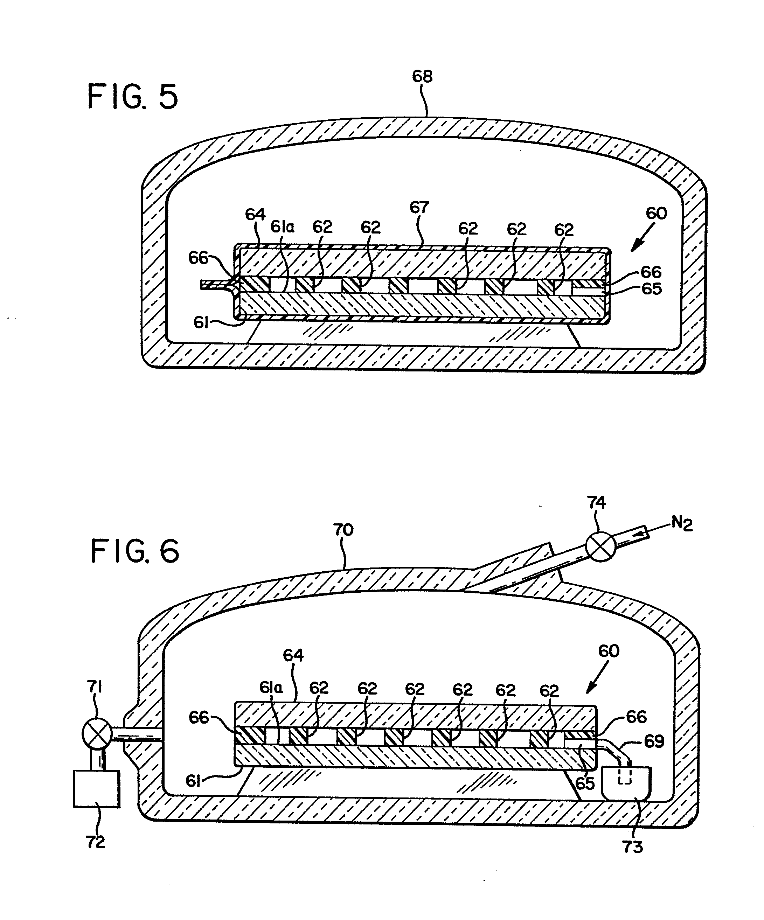

It has been found that an LCD cell which 0113065 corporates a uniformly-distributed conforming force acting on one of its plates can be constructed as shown in FIGS. 5 and 6 (not to scale). In the construction of the LCD cell, indicated generally by 60, a first plate 61 is prepared by depositing a plurality of spacers 62 of uniform thickness at various locations on one of its surfaces 61a as described hereinabove. A second plate 64 is placed on the spacers 62 so that it is substantially aligned with the first plate in a spaced relationship. The plates are hermetically sealed at their periphery with one or more openings, one of which is shown at 65, forming passages through the seal 66.

FIG. 5 illustrates one method of forming a hermetic seal 66 between the plates 61 and 64. First a thermosetting compound such as epoxy is placed around the periphery between the plates in an amount sufficient to contact them and form a seal therebetween. To form a port, a portion of the epoxy may be omitted so that when the epoxy is cured, a gap will occur in the seal where the omission was made. Thereafter, the plates with the thermosetting compound are placed in a flexible, heat-resistant enclosure 67, such as a bag, in which a vacuum is drawn through a vacuum pump (not shown). The vacuum in the flexible enclosure produces a compressive force which is distributed evenly over the plates and the sealing compound. Then, the bag is sealed to preserve the vacuum and placed in a heated oven 68. The combination of temperature and pressure causes the thermosetting sealing compound to set in a uniformly-dimensioned seal, which includes the above-mentioned ports, around the periphery between the plates which disposes the plates in a uniformly-spaced, generally parallel alignment at their edges. Then, the bag and sealed plates are removed from the oven 68, and the sealed plates are removed from the bag.

**0113065**

Next, an amount of liquid crystal material sufficient to substantially fill the space between the plates is inserted through one opening into the space. The conforming force is then generated by hermetically closing all but one opening in the hermetic seal, and thereafter extracting through the opening an amount of liquid crystal material, or air, or both, sufficient to create a pressure differential between the interior of the LCD cell 60 and the ambient atmosphere surrounding it, and therafter to hermetically seal the remaining opening so that the pressure differential will be preserved.

With reference now to FIG. 6, one method of creating a pressure differential between the interior of the LCD cell and the ambient atmosphere is illustrated. One or more filler tubes, one of which is shown at 69, are sealingly attached to the seal 66 in communication with the openings, one of which is shown at 65. The assembly comprising the sealed insulator plates and filler tube is placed in a vacuum apparatus 70, such as a bell jar. The space surrounding and interior to the plates, seal and filler tubes is evacuated through the pneumatic valve 71 and the vacuum pump 72, with the vacuum being introduced into the hermetically sealed space between the plates through the filler tubes.

After the vacuum is drawn, the ends of the filler tubes extending outside the hermetically closed space are inserted into one or more vessels, one of which is shown at 73, which are contained within the evacuation space and which hold an amount of liquid crystal material. Thereafter, the vacuum in the space surrounding the plates is relieved by pumping a gas, nitrogen for example, through the pneumatic valve 74 in the direction shown. The relief of the vacuum within the vacuum apparatus 70 creates a pressure differential with respect to the hermetically sealed space between

-19-

0113065

the insulator plate which forces an amount of the liquid crystal material contained within the vessel 73 through the filler tubes, the amount being sufficient to fill the hermetically closed space. When the space between the plates is filled, the LCD cell is removed from the vacuum apparatus 70 into an environment having an ambient pressure and an amount of liquid crystal material is pumped by conventional means out through the filler tubes. The evacuation of liquid crystal material from the hermetically closed space creates a pressure differential between that space and the ambient pressure of the environment surrounding the LCD cell. The force of the pressure urges the plates 61 and 64 toward one another with the second plate 64 seating on the spacers 62, and thereby produces uniform spacing between the two plates as hereinabove described. The magnitude of the force can be monitored by measurement of the relative amount of liquid crystal material evacuated from the hermetically closed space, or by direct measurement of the pressure differential through the tube 69. Thereafter, all tubes are removed and openings sealed to retain the pressure differential and the conforming force.

It should be evident to those skilled in the art that the inventions described herein and the force models which underlie them are not limited to the above-described embodiments but can be adapted to apply the conforming principle to other LCD cell structures incorporating spacer means such as those described in the patents and articles cited in the Background section hereof.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

0113065

I   CLAIM:

1.  A cell for containing a layer of liquid crystal material of substantially uniform thickness, comprising:

    (a)  a first plate;

    (b)  spacer means of substantially uniform thickness disposed on one, inner surface of said first plate at multiple locations for maintaining a minimum separation between said first plate and a second plate;

    (c)  a second plate having one, inner surface disposed against said spacer means; and

    (d)  loading means for maintaining a pressure differential between the inner and outer surfaces of said second plate, the pressure on said outer surface being greater than the pressure on said inner surface, said pressure differential being substantially uniformly distributed over said inner and outer surfaces.

2.  The cell of claim 1, wherein said loading means comprises a pressure plate disposed adjacent said second plate so that said second plate is between said pressure plate and said first plate; a layer of resilient material disposed between said pressure plate and said second plate; and means for forcing said pressure plate toward said first plate, the rigidity of said pressure plate being greater than the rigidity of said second plate, said force being substantially uniformly distributed over said second plate by said resiliant material.

3. The cell of claim 2 wherein said means for forcing said pressure plate toward said first plate comprises means for clamping said pressure plate to said first plate around the periphery of said cell, the rigidity of said first plate being greater than the rigidity of said second plate.

4. The cell of claim 2 wherein said resilient material comprises an elastomer compound.

5. The cell of claim 4 wherein said elastomer compound comprises a silicone rubber compound.

6. The cell of claim 2 wherein said pressure plate is prestressed to produce a convex inner surface.

7. The cell of claim 1 further comprising liquid crystal material disposed between said first and second plates along with said spacer means, and means disposed around the periphery of said cell for containing said liquid crystal material between said first and second plates.

8. A method for constructing a cell for containing a layer of liquid crystal material of substantially uniform thickness, comprising the steps of:

    (a)  placing spacing material of substantially uniform thickness on one, inner surface of a first plate at selected locations;

    (b)  placing one, inner surface of a second plate adjacent said spacing material; and (c) creating a pressure differential between the inner and outer surfaces of said second plate, the pressure on the outer surface being greater than the pressure on the inner surface, said pressure differential being substantially uniformly distributed over said inner and outer surfaces.

9. The method of claim 8 wherein step (c) comprises placing a resilient material on the outer surface of said second plate; placing a pressure plate adjacent said resilient material so that said resilient material is sandwiched between said pressure plate and said second plate; and thereafter clamping said pressure plate to said first plate at the periphery thereof.

10. The method of claim 9 wherein said resilient material is an elastomer compound.

11. The method of claim 10 wherein said elastomer compound is a clear silicone rubber compound.

12. The method of claim 8 further comprising the steps of placing a liquid crystal material between said first and second plates, and sealing said cell around the periphery thereof for containing said liquid crystal material therebetween.

13. The method of claim 8 further comprising the step of prestressing said pressure plate to produce a convex inner surface prior to said clamping step.

FIG. 1

FIG. 2

FORCE

FIG. 3

FIG. 4

**FIG. 5**

**FIG. 6**

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 506 978 (C.E.A.)  * Claim 1 * | 1,7,8, 12 | G 02 F  1/133 |
| X | FR-A-2 490 851 (SONY)  * Claim 1; figure 2 * | 1,7,8, 12 | |
| A | GB-A-2 014 345 (SIEMENS)  * Page 2, lines 7-23; figures 1-2 * | 1,2,7- 9,12 | |
| A | GB-A-1 457 531 (CLAUDCHEN)  * Page 3, lines 80-107; figure 2 * | 1-3 | |
| A | PATENTS ABSTRACTS OF JAPAN, vol. 6, no. 192 (P-145)[1070], 30th September 1982 & JP - A - 57 101 818 (SUWA SEIKOSHA K.K.) 24-06-1982 * Abstract * | 1,2,4, 5,7-12 | TECHNICAL FIELDS SEARCHED (Int. Cl. ³)  G 02 F  1/01 G 02 F  1/133 G 02 F  1/17 |
| A | PATENTS ABSTRACTS OF JAPAN, vol. 2, no. 125, 20th October 1978, page 7470 E 78 & JP - A - 53 91 763 (MITSUBISHI DENKI K.K.) 11-08-1978 | | |

The present search report has been drawn up for all claims

| Place of search THE HAGUE | Date of completion of the search 21-03-1984 | Examiner BORMS F. |
|---|---|---|

EPO Form 1503. 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document